**Europäisches Patentamt**

**European Patent Office**

**Office européen des brevets**

(11) Veröffentlichungsnummer : **0 213 394**
**B1**

(12) # EUROPÄISCHE PATENTSCHRIFT

(45) Veröffentlichungstag der Patentschrift :
**10.02.88**

(21) Anmeldenummer : **86110442.0**

(22) Anmeldetag : **29.07.86**

(51) Int. Cl.⁴ : **B 62 B   9/02**

---

(54) **Treppenraupe.**

---

(30) Priorität : **28.08.85 DE 3530695**

(43) Veröffentlichungstag der Anmeldung :
**11.03.87 Patentblatt 87/11**

(45) Bekanntmachung des Hinweises auf die Patenterteilung : **10.02.88 Patentblatt 88/06**

(84) Benannte Vertragsstaaten :
**AT CH FR GB LI NL SE**

(56) Entgegenhaltungen :
**DE-A- 3 137 254**
**DE-A- 3 146 550**
**DE-A- 3 225 680**
**DE-A- 3 328 807**

(73) Patentinhaber : **Kleindienst GmbH**
**Argonstrasse 8**
**D-8900 Augsburg (DE)**

(72) Erfinder : **Bihler, Franz, Ing. grad.**
**Gärtnerstrasse 10**
**D-8900 Augsburg (DE)**
Erfinder : **Maurer, Günter**
**Johann-Strauss-Strasse 28**
**D-8900 Augsburg (DE)**

(74) Vertreter : **Ernicke, Hans-Dieter, Dipl.-Ing. et al**
**Schwibbogenplatz 2b**
**D-8900 Augsburg (DE)**

## Beschreibung

Die Erfindung betrifft eine Treppenraupe mit den Merkmalen im Begriff des Hauptanspruches.

Mit Treppenraupen können Personen in Rollstühlen von einer zweiten Hilfsperson ohne große Kraftanstrengung über Treppen auf- und abbewegt werden. Ein Problem besteht allerdings beim Aufladen des Rollstuhls auf die Treppenraupe. Dazu muß nämlich der Rollstuhl gegenüber der Raupe angehoben werden, was von der Hilfsperson erhebliche Kräfte verlangt.

Aus der DE-A 31 37 254 ist es bekannt, zum Aufladen einen kombinierten Schwenk-Schiebeadapter zu verwenden. Dazu wird der Adapter an das vordere Ende der Treppenraupe geschoben und lädt mit einer Schwenkbewegung den Rollstuhl auf. Dabei wird der Rollstuhl bereits ein Stück angehoben. Anschließend wird der Adapter mit dem Rollstuhl in einer ansteigenden Führung zum anderen Ende der Treppenraupe gezogen und dort verriegelt. Während der Schiebebewegung wird der Rollstuhl durch die schräge Führung ebenfalls angehoben. Diese zweimaligen Hebevorgänge können allerdings nur von der Hilfsperson ausgeführt werden, die dazu über entsprechende Kräfte verfügen muß. Für weibliche Hilfspersonen ist die Bedienung solche Raupen sehr anstrengend.

Die DE-A 31 46 550 offenbart demgegenüber eine weiterentwickelte Treppenraupe, mit der wenigstens der Rollstuhl unterfahren werden kann. Zum Aufladen des Rollstuhls bedarf es zwar nur noch einer Schwenkbewegung des Adapters, dabei muß der Rollstuhl ebenfalls angehoben werden. Außerdem hat diese Treppenraupe den Nachteil, daß zum Unterfahren des Rollstuhls das obere Raupentrum horizontal abgespannt werden muß und damit in einer verschleißfördernden, S-förmigen Biegung geführt wird.

Es ist daher Aufgabe der vorliegenden Erfindung, eine Möglichkeit aufzuzeigen, wie der Aufladevorgang einfacher und kräftesparender ausgeführt werden kann.

Die Erfindung löst diese Aufgabe mit den Merkmalen des Kennzeichens des Hauptanspruches.

Die zum Aufladen erforderliche Anhebung des Rollstuhls wird durch das Auffahren auf zwei schräge Auffahrtsrampen bewirkt. Dazu sind nur geringe Kräfte erforderlich. Außerdem kann der Rollstuhlfahrer selbst diese Auffahrt unterstützen oder sogar den Rollstuhl allein auf die Rampen bewegen. In der angehobenen Stellung wird der Rollstuhl nach Verbindung mit dem Adapter in einer Drehbewegung nur noch gekippt, ohne dabei weiter angehoben zu werden. Diese Schwenkbewegung kostet kaum mehr Kraft.

Ein weiterer Vorteil in der Erfindung liegt darin, daß die Raupenführung von der Aufladmechanik unabhängig ist. Das obere Raupentrum kann zum erhöhten Ende des Fahrgestells hin schräg ansteigen und braucht nicht auf diesem Weg horizontal abgespannt zu werden. Eine solche Raupenführung ist dessen ungeachtet aber auch möglich.

Die seitlichen Auffahrtsrampen haben ferner noch den Vorteil, daß sie das Fahrgestell der Treppenraupe verbreitern und dadurch eine zusätzliche Sicherung gegen ein seitliches Kippen bieten. Dies ist vor allem beim Befahren von gewundenen und auch geraden Treppen wichtig. Soll die leere Treppenraupe wenig Platz beanspruchen, können die Auffahrtsrampen auch abnehmbar gestaltet sein.

Die Auffahrtsrampen sind schwenkbar gelagert, um für den Fahrbetrieb die Spitzen vom Boden anheben zu können. Die Abfahrtsrampen können sich dann am ebenen Boden und an Treppenstufen nicht verhaken. Die Schwenkbewegung kann im weiteren aber auch zur Erzielung einer gewissen Rastposition für den Rollstuhl ausgenutzt werden, aus der dieser nicht von selbst wieder herabrollen kann.

Die erfindungsgemäßen Auffahrtsrampen ermöglichen auch eine einfachere und kinematisch günstigere Konstruktion des Adapters und seines Schwenklagers. Damit läßt sich auch die Konstruktion zur Verriegelung des Adapters in seiner hinteren Schwenklage vereinfachen.

Mit den abhängigen Ansprüchen sind vorteilhafte Ausführungsformen der Auffahrtsrampen nebst der unterschiedlichen Ausbildung ihrer Schwenklager angegeben.

Die Erfindung ist in den Zeichnungen beispielsweise und schematisch dargestellt. Im einzelnen zeigen

Fig. 1 eine Seitenansicht einer Treppenraupe mit Wippe in Aufnahmestellung,

Fig. 2 eine Treppenraupe gemäß Fig. 1 mit aufgeladenem Rollstuhl,

Fig. 3 eine Treppenraupe gemäß Fig. 1 und 2 in Draufsicht,

Fig. 4 eine Seitenansicht einer Treppenraupe mit Sicheln,·

Fig. 5 eine detaillierte und vergrößerte Seitenansicht der Adapterlagerung und

Fig. 6 eine abgebrochene Vorderansicht des Adapters.

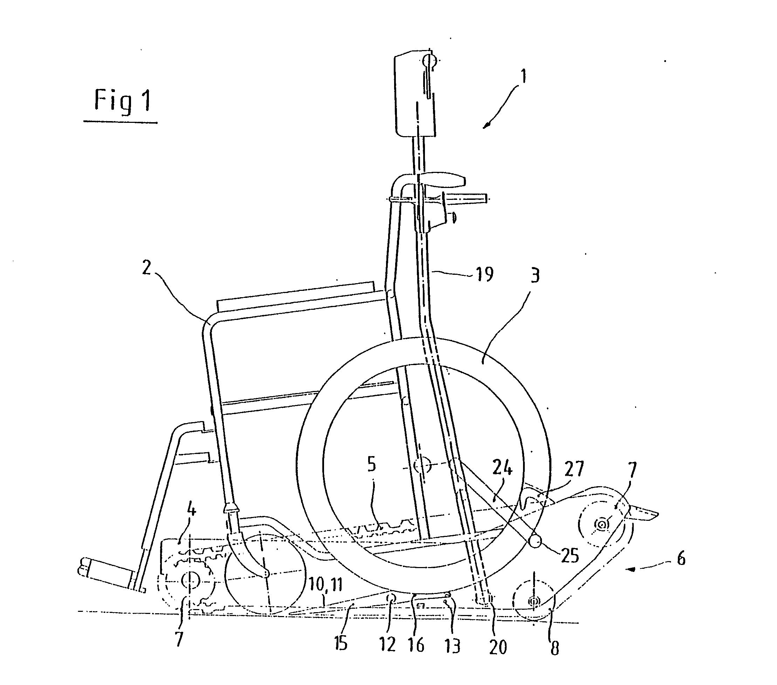

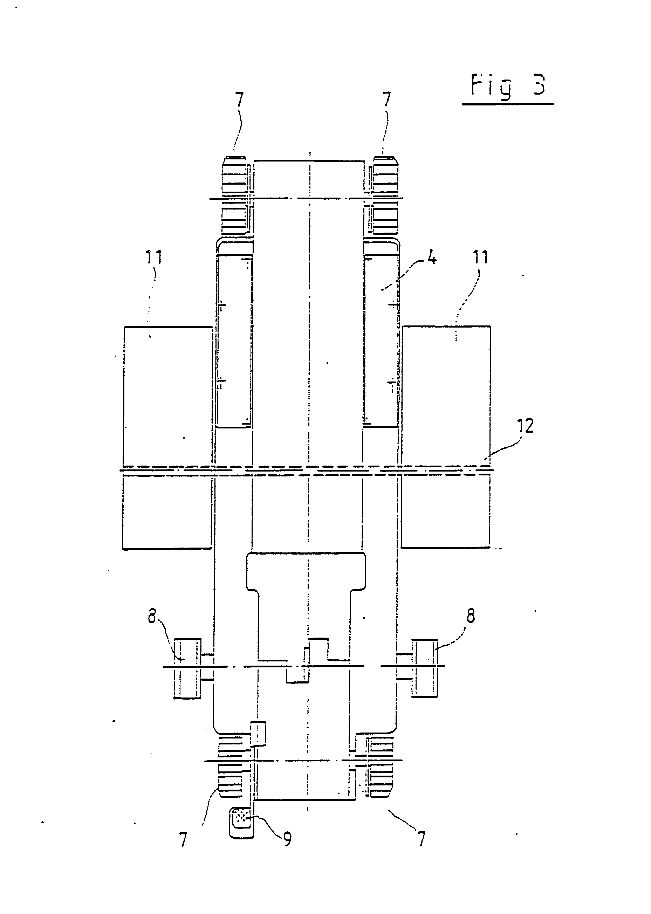

Fig. 1 bis 4 zeigen eine Treppenraupe 1 mit einem Fahrgestell 4 und zwei, über Umlenkräder 7 geführten, endlosen Raupenbändern 5. Die Treppenraupe 1 weist am hinteren Ende einen geneigten und erhöhten Kletterabschnitt 6 auf, über den die ersten Treppenstufen erklommen und befahren werden. Das Obertrum der Raupenbänder 5 ist vom vorderen bis zum hinteren Ende in einer stetig ansteigenden Linie ohne Abspannung geführt. Im Fahrgestell 4 sind auch zwei, über ein Pedal 9 ausrückbare Stützräder 9 angeordnet, mittels derer die leere Treppenraupe 1 in gekippter Stellung auf dem Erdboden verfahren werden kann.

Die Treppenraupe 1 weist auch einen Adapter 19 zum Aufladen des Rollstuhls 2 auf. Am Adapter 19 sind an sich bekannte Klemmeinrichtung zum Befestigen der Rollstuhlgriffe und die Steuereinrichtung für den Fahrbetrieb der Treppenraupe 1 angeordnet.

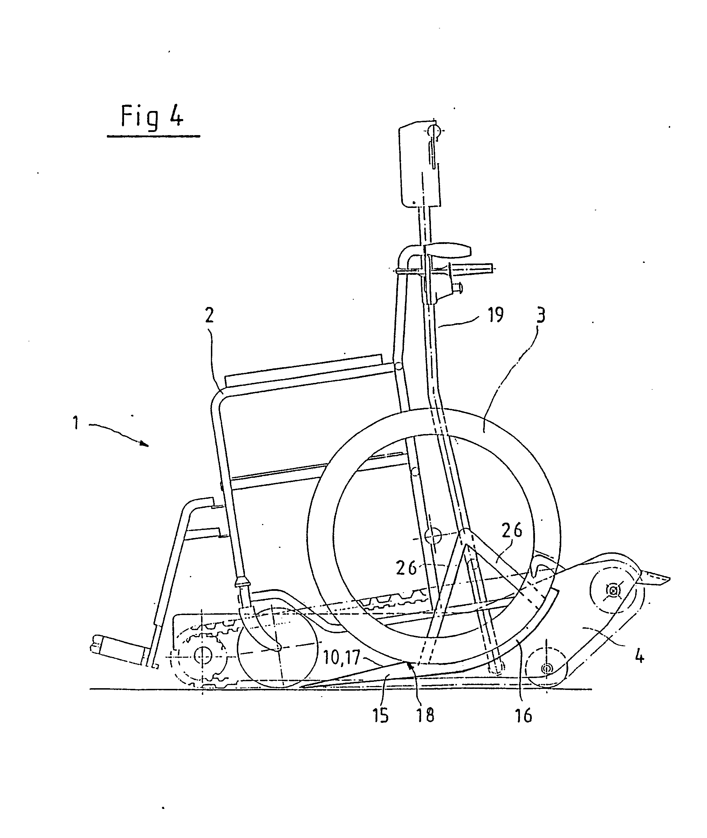

Um das Aufladen des Rollstuhls 2 zu erleichtern, weist die Treppenraupe 1 zu beiden Seiten des Fahrgestells 4 jeweils eine Auffahrtsrampe 10 auf, auf die der Rollstuhl 2 mit seinen Rädern 3 geschoben und dabei angehoben werden kann. In den Ausführungsbeispielen der Fig. 1 bis 3 sind die Auffahrtsrampen 10 als Wippen 11 ausgebildet, während das Ausführungsbeispiel der Fig. 4 Rampen in Form von Sicheln 17 zeigt.

Gemäß Fig. 1 bis 3 sind die Wippen 11 über steckbare oder feste Schwenklager 12 am Fahrgestell 4 drehbar gelagert. Die Schwenklager 12 sind mit Abstand oberhalb der Unterkante der Raupenbänder 5 angeordnet und verlaufen mit ihrer Achse horizontal und quer zur Längsrichtung der Treppenraupe 1. Die Wippen 11 weisen vor dem Schwenklager 12 ein Rampenteil 15 und dahinter ein Wannenteil 16 auf. Das Rampenteil 15 ist länger als das Wannenteil 16 und ist keilförmig ausgebildet. Das Wannenteil 16 ist vorzugsweise auf der Oberseite mit einer der Radkrümmung 3 angepaßten Wölbung zu sehen. Zwischen Rampenteil 15 und Wannenteil 16 ist oberhalb des Schwenklagers 12 ein Höcker 18 ausgeformt, der für den gemäß Fig. 1 aufgefahrenen Rollstuhl 2 ein Widerlager bildet und ein unbeabsichtiges Herunterrollen verhindert.

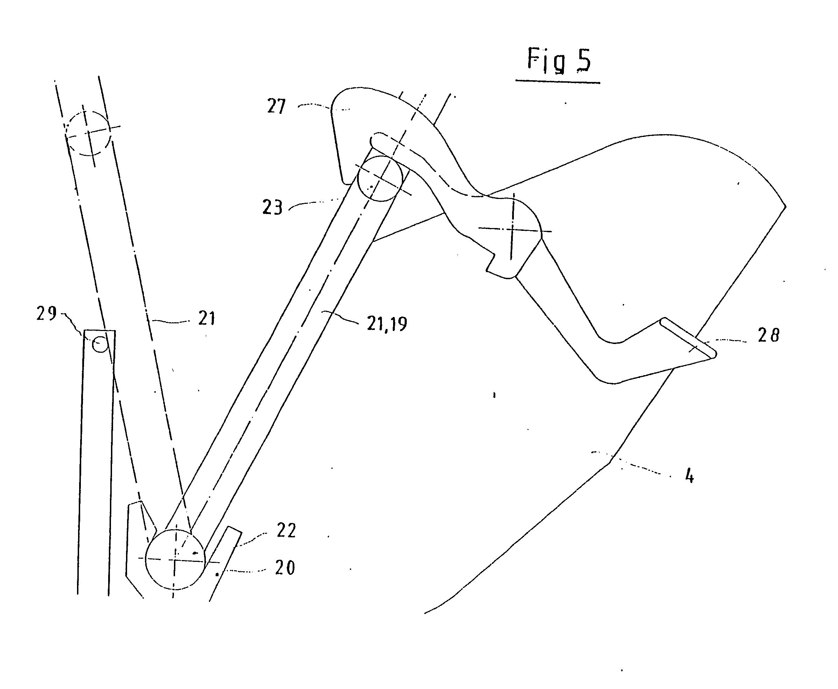

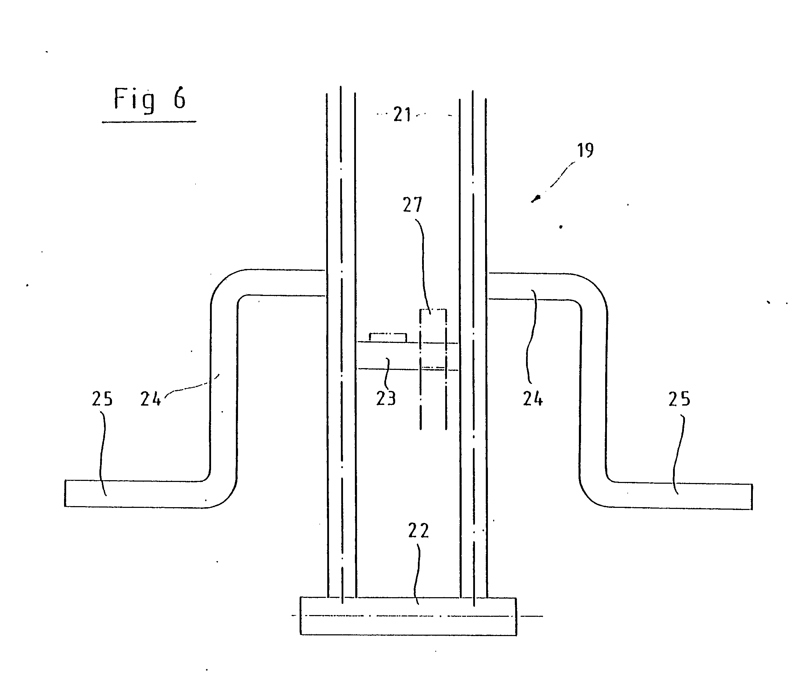

Zum Auffahren des Rollstuhls 2 ist die schwenkbare Wippe 11 mit ihrem Rampenteil 15 abgeklappt, und der Adapter 19 befindet sich in seiner vorderen Schwenkstellung, in der er durch einen Anschlag 29 (vgl. Fig. 5) gehalten ist. Der hochgeschobene Rollstuhl 2 ruht mit seinen Rädern 3 nach Überfahren des Höckers 18 einerseits auf dem Wannenteil 16 und andererseits auf dem freien Ende 25 der Stützbügel 24 am Adapter 19 (vgl. Fig. 6). Die Höcker 18 sichern dabei die Räder 3 vor unbeabsichtigtem Herabrollen. In der gezeigten Stellung (Fig. 1) wird auch der Rollstuhl 2 mit seinen Griffen am Adapter 19 befestigt.

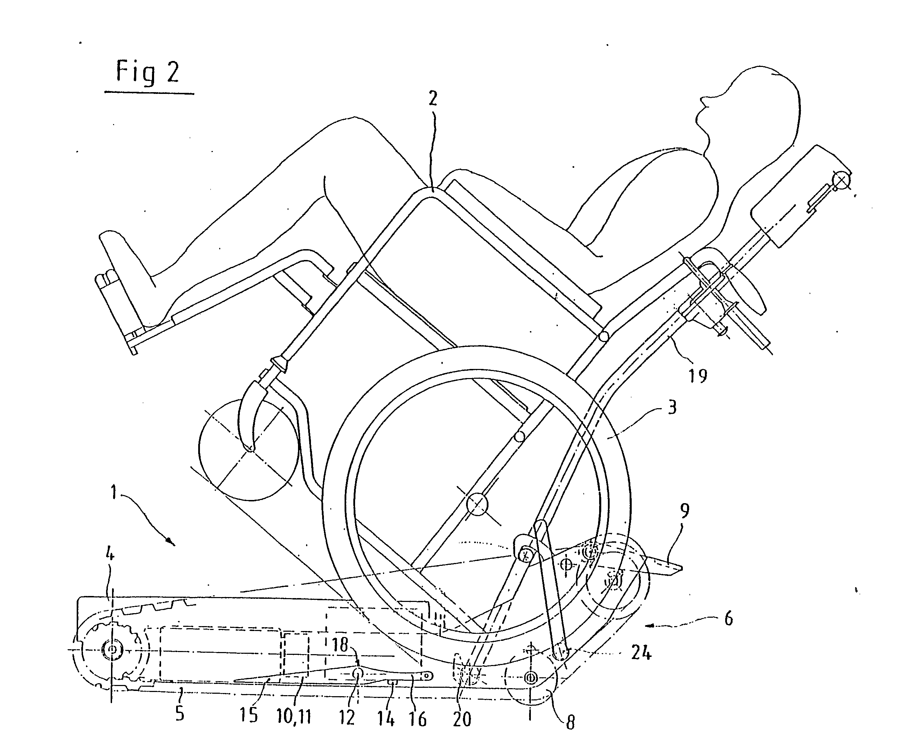

Zum Aufladen des Rollstuhls 2 wird der Adapter 19 gemäß Fig. 2 geschwenkt. Dabei wird auch die Wippe 11 in die in Fig. 2 gezeigte, horizontale Lage geschwenkt. Die Schwenkbewegung wird durch einen Anschlag 14 am Fahrgestell 4 begrenzt. Außerdem sind jeweils zwei lösbare Rasten 3 vorgesehen, die vorzugsweise als federbelastete Kugelbolzen ausgebildet sind. Die beiden Rasten 13 halten die Wippe 11 in den beiden in Fig. 1 und 2 gezeigten Stellungen fest. Wie Fig. 2 zeigt, wird beim Aufladen des Rollstuhls 2 durch die Schwenkbewegung der Wippe 11 automatisch das Rampenteil 15 vom Erdboden hochgeschwenkt. Es verläuft mit seiner Unterkante dann mit Abstand parallel zur Unterkante des unteren Raupenbandes 5. Durch das Hebelverhältnis der Wippe 11 ist dazu nur eine kleine Schwenkbewegung notwendig.

Im Ausführungsbeispiel der Fig. 1 ist die Geometrie der Wippe 11 so getroffen, daß sie beim Auffahren des Rollstuhls 2 noch nicht abschwenkt, sondern erst beim Verschwenken des Adapters 19. Es ist aber auch möglich, die Wippe 11 so zu gestalten, daß das Wannenteil 16 bereits nach Überfahren des Höckers 18 abschwenkt. Dabei wird das Rad 3 nur unwesentlich abgesenkt, findet aber eine noch bessere Sicherung gegen unbeabsichtigtes Herabrollen von der Wippe 11.

Wie Fig. 2 zeigt, ruhen die Räder 3 nach dem Verschwenken des Adapters 19 nur noch auf dem Stützbügel 24 und sind von der Wippe 11 abgehoben. Durch die Rampen 10 braucht dabei der Rollstuhl mit seinem Insassen nicht oder nur noch unwesentlich angehoben zu werden. Die Räder 3 bewegen sich mit ihrer Achse auf einer im wesentlichen horizontalen Bahn, so daß nur eine Kippbewegung des Rollstuhls 2 um diese Radachse erfolgt.

Kinematisch günstig wirkt sich dabei auch die tiefe Anordnung des Schwenklagers 20 für den Adapter 19 aus. Das Lager 20 ist als schräg nach oben offene Lagerschale ausgebildet (vgl. Fig. 5), die in Bodennähe im Fahrgestell 4 befestigt ist. Der Adapter 19 besteht aus zwei Standrohren 21, die am unteren Ende durch eine Querstange 23 und eine seitlich vorstehende Lagerstange 22 miteinander verbunden sind. Der Adapter 19 wird mit seiner Lagerstange 22 einfach in die Schalen des Lagers 20 gesteckt und kann genauso leicht wieder entnommen werden. Der eingesteckte Adapter 19 kann durch das Lager 20 zum Aufladen des Rollstuhls 2 nur reine Schwenkbewegungen ausführen. Die Schwenkbewegung wird in der Aufnahmeposition (Fig. 1) durch einen im Fahrgestell 4 befestigten Anschlag 29 begrenzt. In der Ladeposition (Fig. 2) wird der Adapter 19 durch einen schwenkbar im Fahrgestell 4 gelagerten Sperrhaken 27 arretiert, der dazu die Querstange 23 hintergreift. Mittels eines Fußpedales 28 kann der Sperrhaken 27 wieder ausgeschwenkt werden.

Im Ausführungsbeispiel der Fig. 1 bis 3, bei denen Wippen 11 Verwendung finden, sind am Adapter 19 seitlich ausladende, Z-förmig gebogene Stützbügel 24 befestigt, die mit ihren freien Enden 25 die Räder 3 des Rollstuhls 2 untergreifen.

Im Ausführungsbeispiel der Fig. 4 sind die Rampen 10 als Sicheln 17 ausgebildet, die ebenfalls ein Rampenteil 15 und ein Wannenteil 16 mit einem dazwischenliegenden Höcker aufweisen. Die Sicheln 17 sind über Streben 26 am Adapter 19 befestigt und werden mit diesem beim Auf- und Abladen des Rollstuhls 2 verschwenkt. Die Streben 26 sind in ähnlicher Weise gebogen wie die Stützbügel 24 beim Adapter der Ausführungsbeispiele 1 bis 3. Als einziges Stützelement für die Räder 3 sind damit die der Radkrümmung angepaßten Wannenteile 16 vorgesehen. Auch im Ausführungsbeispiel der Fig. 4 ist die Geometrie der Sicheln 17 so getroffen, daß bei einer Schwenkbewegung die Rampenteile 15 mit ihren Spitzen vom Erdboden abheben (vgl. Fig. 2).

## Patentansprüche

1. Treppenraupe mit einem Fahrgestell (4), endlosen Raupenbändern (5) und einem unverschiebbar, aber schwenkbar gelagerten Adapter (19) zur Aufnahme eines Rollstuhls (2), dadurch gekennzeichnet, daß an der Treppenraupe (1) zu beiden Seiten des Fahrgestells (4) schwenkbar gelagerte Auffahrtsrampen (10) für die Räder (3) des Rollstuhls (2) angeordnet sind.

2. Treppenraupe nach Anspruch 1, dadurch gekennzeichnet, daß die Auffahrtsrampen (10) als schwenkbar (12) am Fahrgestell (4) gelagerte Wippen (11) ausgebildet sind.

3. Treppenraupe nach Anspruch 2, dadurch gekennzeichnet, daß die Wippe (11) vor dem Schwenklager (12) ein längeres, gerades Rampenteil (15) und hinter dem Schwenklager (12) ein Wannenteil (16) aufweist, zwischen denen ein Höcker (18) angeordnet ist.

4. Treppenraupe nach Anspruch 2 oder 3, dadurch gekennzeichnet, daß zur Begrenzung der Schwenkbewegung der Wippen (11) und zur Arretierung jeweils ein Anschlag (14) und eine Raste (13) vorgesehen sind.

5. Treppenraupe nach Anspruch 1, dadurch gekennzeichnet, daß die Auffahrtsrampen (10) als Sicheln (17) ausgebildet sind, die am Adapter (19) befestigt und mit diesem verschwenkbar sind.

6. Treppenraupe nach Anspruch 5, dadurch gekennzeichnet, daß die beiden Sicheln (17) ein gerades Rampenteil (15) und ein dem Rad (3) des Rollstuhls (2) angepaßtes Wannenteil (16) sowie einen Höcker (18) dazwischen aufweisen.

7. Treppenraupe nach Anspruch 1 oder einem der folgenden, dadurch gekennzeichnet, daß das Schwenklager (20) für den Adapter (19) in Bodennähe am Fahrgestell (4) angeordnet und als Schalenlager ausgebildet ist.

8. Treppenraupe nach Anspruch 1 oder einem der folgenden, dadurch gekennzeichnet, daß zur Begrenzung der Schwenkbewegung und Arretierung des Adapters (19) auf der einen Seite ein Anschlag (29) und auf der anderen Seite ein schwenkbar gelagerter und über ein Pedal (28) entriegelbarer Sperrhaken (27) vorgesehen ist.

## Claims

1. A track-type transporter for stairs comprising an undercarriage (4), an endless track band (5) and a non-slidably but pivotably mounted adaptor (19) for receiving a wheelchair (2), characterised in that pivotably mounted ramps (10) for the wheels (3) of the wheelchair (2) are disposed on both sides of the undercarriage (4) of the transporter (1).

2. A transporter according to claim 1, characterised in that the ramps (10) are in the form of rockers (12) pivotably mounted on the undercarriage (4).

3. A transporter according to claim 2, characterised in that the rocker (11) comprises a long straight ramp portion (15) in front of the pivot bearing (12) and a trough part (16) behind the pivot part (12), the two parts being separated by a protuberance (18).

4. A transporter according to claim 2 or 3, characterised in that an abutment (14) and a catch (13) are provided for limiting the tilting motion of the rockers (11) and for rocking them.

5. A transporter according to claim 1, characterised in that the ramps (10) are sickle-shaped members (17) which are secured to and tiltable with the adaptor (19).

6. A transporter according to claim 5, characterised in that the two sickle members (17) have a straight ramp part (15) and a trough part (16) matching the wheel (3) of the wheelchair (2), the two parts being separated by a protuberance (18).

7. A transporter according to claim 1 or any of the subsequent claims, characterised in that the pivot bearing (20) for the adaptor (19) is disposed on the undercarriage (4) near the ground and is in the form of a split bearing.

8. A transporter according to claim 1 or any of the subsequent claims, characterised in that in order to limit the tilting motion and lock the adaptor (19), an abutment (29) is disposed on one side and a pivotably mounted latch (27) releasable by a pedal (28) is disposed on the other side.

## Revendications

1. Tracteur à chenilles pour escalier comprenant un chariot (4), des patins de chenille (5) sans fin et un adapteur (19), monté fixe en translation mais basculant, de réception d'un fauteuil roulant (2), caractérisé en ce que sur le tracteur à chenilles pour escalier (1) sont montées basculantes, de part et d'autre du chariot (4), deux rampes d'accès (10) pour les roues du fauteuil roulant (2).

2. Tracteur à chenilles pour escalier suivant la revendication 1, caractérisé en ce que les rampes d'accès (10) sont constituées sous la forme de bascules (11) montées basculantes (12) sur le chariot (4).

3. Tracteur à chenilles pour escalier suivant la revendication 2, caractérisé en ce que la bascule (11) comporte, à l'avant du palier d'articulation (12), une partie en forme de rampe (15) rectiligne et assez longue et, derrière le palier d'articulation (12), une partie en forme de cuvette (16), entre lesquelles est interposé un bossage (18).

4. Tracteur à chenilles pour escalier suivant la revendication 2 ou 3, caractérisé en ce que, pour limiter le mouvement de basculement des bascules (11) et pour le blocage, il est prévu des butées (14) et des crans d'arrêt (13).

5. Tracteur à chenilles pour escalier suivant la revendication 1, caractérisé en ce que les rampes d'accès (10) sont constituées sous la forme de faucilles qui sont fixées à l'adapteur (19) et qui peuvent basculer avec celui-ci.

6. Tracteur à chenilles pour escalier suivant la revendication 5, caractérisé en ce que les deux faucilles (17) comprennent une partie formant rampe (15) rectiligne et une partie formant cuvette (16) adaptée à la roue (3) du fauteuil roulant (2), ainsi qu'un bossage (18) interposé entre ces deux parties.

7. Tracteur à chenilles pour escalier suivant la revendication 1 ou l'une des suivantes, caractérisé en ce que le palier d'articulation (20) de l'adapteur (19) est monté sur le chariot (4), à proximité du sol et est constitué sous la forme d'un palier à coquilles.

8. Tracteur à chenilles pour escalier suivant la revendication 1 ou l'une des suivantes, caractérisé en ce que, pour limiter le basculement et pour le blocage de l'adapteur (19), il est prévu, d'un côté, une butée (29) et, de l'autre côté, un crochet de blocage (27) monté basculant et pouvant être déverrouillé par une pédale (28).

0 213 394

Fig 1

Fig 2

2

Fig 3

## Fig 4

Fig 5

0 213 394

Fig 6

0 213 394